Europäisches Patentamt

European Patent Office

Office européen des brevets

(11) Publication number: **0 469 601 A2**

## EUROPEAN PATENT APPLICATION

(21) Application number: **91112945.0**

(22) Date of filing: **01.08.91**

(51) Int. Cl.⁵: **B29D 29/00**, //B29K23:00

(30) Priority: **01.08.90 JP 202472/90**

(43) Date of publication of application:
**05.02.92 Bulletin 92/06**

(84) Designated Contracting States:
**DE FR IT**

(71) Applicant: **Tosoh Corporation**
**4560, Kaisei-cho**
**Shinnanyo-shi, Yamaguchi-ken 746(JP)**

(72) Inventor: **Kuwata, Kenji**
**2-4, Madokoro 4-chome**
**Shinnayo-shi, Yamaguchi(JP)**
Inventor: **Nakagawa, Tatsushi**
**858-46, Oaza Mure**
**Bofu-shi, Yamaguchi(JP)**

(74) Representative: **Hansen, Bernd, Dr.**
**Dipl.-Chem. et al**
**Hoffmann, Eitle & Partner Patent- und**
**Rechtsanwälte Arabellastrasse 4 Postfach**
**81 04 20**
**W-8000 München 81(DE)**

(54) **Rubber belting.**

(57) Rubber belting obtained by vulcanizing a chlorinated ethylene-α-olefin copolymer with an organic peroxide, the chlorinated ethylene-α-olefin copolymer being prepared by a solution process in which a copolymer comprising an α-olefin having from 3 to 6 carbon atoms and ethylene is dissolved in a solvent and then chlorinated to have a chlorine content of from 23 to 33% by weight. The belting has excellent resistance to heat and dynamic fatigue.

FIELD OF THE INVENTION

This invention relates to rubber belting having excellent resistance to heat and dynamic fatigue.

BACKGROUND OF THE INVENTION

Chloroprene rubber has been used as a chief rubber polymer of rubber belting. For use as automotive parts, however, with an increase in temperature of the engine room, there has recently been a demand for rubber materials having higher heat resistance. To improve heat resistance, part of chloroprene rubber for use as a timing belt or a V-belt is recently replace by hydrogenated NBR (acrylonitrile-butadiene rubber).

However, hydrogenated NBR, though excellent in heat resistance, has an economical disadvantage because of its expensiveness. It has therefore been demanded to develop a new rubber material which is excellent in not only heat resistance but economy. To meet this demand, chlorosulfonated polyethylene has been extending its use as a new material for belting.

In using chlorosulfonated polyethylene as a belt material, peroxide vulcanization is a technically attractive approach to a further improvement of heat resistance. However, the inventors ascertained that chlorosulfonated polyethylene has low reactivity to peroxides and recognized that this problem should be settled down for obtaining high performance belting.

SUMMARY OF THE INVENTION

An object of the present invention is to provide belting having resistance to heat and dynamic fatigue.

The present invention relates to rubber belting obtained by vulcanizing a chlorinated ethylene-$\alpha$-olefin copolymer with an organic peroxide, the chlorinated ethylene-$\alpha$-olefin copolymer being prepared by a solution process in which a copolymer comprising an $\alpha$-olefin having from 3 to 6 carbon atoms and ethylene is dissolved in a solvent and then chlorinated to have a chlorine content of from 23 to 33% by weight.

DETAILED DESCRIPTION OF THE INVENTION

Belting must not only have higher heat resistance than chloroprene but also satisfy resistance to dynamic fatigue as a requirement characteristic of belting. It is also required to have excellent cold resistance sufficient to withstand use in a cold district or in the cold season. These requirements for belting are numerically evaluated as follows.

1. Processability:
Mooney viscosity: 30 to 80 (ML1 + 4, 100°C)
2. Tensile Characteristics:
Tensile strength at break (TB): 150 kg/cm$^2$ or more
Elongation at break (EB): 250% or more
Hardness (Hs) (JIS-A): 68 to 78
3. Heat Resistance (150°C x 3 days):
Change in elongation at break ($\Delta$EB): -60% or less
Change in hardness ($\Delta$Hs): +15 or less
4. Dynamic Fatigue Properties (flexometer, 100°C):
Dynamic strain: 1.5% or less
5. Cold Resistance (Gehman torsional test):
    $T_5$:      -20°C or lower
    $T_{10}$:    -25°C or lower
    $T_{100}$:  -35°C or lower
Materials satisfying these criteria are deemed to have satisfactory performance as belting.

The copolymer comprising an $\alpha$-olefin having from 3 to 6 carbon atoms and ethylene includes an ethylene-propylene copolymer, an ethylene-butene copolymer, an ethylene-pentene copolymer, and an ethylene-hexene copolymer, with an ethylene-butene-1 copolymer and an ethylene-propylene copolymer being preferred.

A molar ratio of ethylene to $\alpha$-olefin in the copolymer ranges from 98/2 to 85/15. If the proportion of an $\alpha$-olefin is less than 2 mol%, desired cold resistance cannot be obtained. For example, chlorinated polyethylene obtained by chlorination of an ethylene homopolymer (polyethylene) does not provide a satisfactory rubber composition due to insufficient cold resistance. If the proportion of an $\alpha$-olefin exceeds

15 mol%, any further improvement on cold resistance cannot be obtained. A preferred ethylene to $\alpha$-olefin molar ratio is from 97/3 to 90/10.

Chlorination of the above-described ethylene-$\alpha$-olefin copolymer must be carried out in a solution process, in which the copolymer is uniformly dissolved in a solvent, e.g., chlorinated benzene, methylene chloride, chloroform, carbon tetrachloride, and tetrachloroethylene, and chlorinated with a chlorinating agent, e.g., chlorine and sulfuryl chloride, in the presence of a radical generator or ultraviolet light.

In the present invention, it is very important for assuring satisfactory cold resistance to synthesize a chlorinated ethylene-$\alpha$-olefin copolymer according to the above-described solution process. A chlorinated ethylene-$\alpha$-olefin copolymer prepared by heterogeneous chlorination with polyolefin particles suspended in water (aqueous suspension process) would lose softness in low temperatures and thus fail to exhibit cold resistance required for belting.

The chlorinated ethylene-$\alpha$-olefin copolymer according to the present invention has a chlorine content of from 23 to 33% by weight. If the chlorine content is less than 23%, the resulting vulcanization product has deteriorated oil resistance, which is unfavorable for belting. On the other hand, if it exceeds 33%, the belting becomes hard and has poor cold resistance. A preferred chlorine content ranges from 25 to 31% by weight.

Vulcanization of the thus synthesized chlorinated copolymer with a peroxide is carried out by using, as a vulcanizing agent, an organic peroxide such as dicumyl peroxide, $\alpha,\alpha'$-bis(t-butylperoxy-m-isopropyl)-benzene,1,1-bis(t-butylperoxy)-3,3,5-trimethylcyclohexane, and 2,5-dimethyl-2,5-di(t-butylperoxy)hexane. The organic peroxide is used in an amount of from 0.5 to 8 parts by weight, and preferably from 1 to 6 parts by weight, per 100 parts by weight of the ethylene-$\alpha$-olefin copolymer.

In order to improve crosslinking efficiency of vulcanization, a crosslinking aid, e.g., triallyl isocyanurate, triallyl cyanurate, and divinylbenzene, may be used in combination.

Vulcanization with a peroxide is of importance for improving durability of belting. Taking dynamic characteristics as a belt into consideration, reduction in dynamic strain against dynamic stimulation can be achieved only with the peroxide-vulcanization product of the specific chlorinated ethylene-$\alpha$-olefin copolymer.

The belting according to the present invention is suitable for various applications demanding high heat resistance and high dynamic fatigue resistance, such as various V-belts including a low-edge type and a wrapped type, poly-V-belts, timing belts, flat belts, and conveyor belts. In particular, the belting of the present invention manifests the highest effect when used as a timing belt for automobiles (called toothed belt) or a poly-V-belt (called V-ribbed belt or poly-ribbed belt) where higher resistance to heat and dynamic fatigue is demanded.

If desired, additives commonly compounded in general belting such as reinforcements, acid acceptors, plasticizers, fillers, antioxidants, and processing aids may be added to the chlorinated copolymer to be vulcanized.

Suitable reinforcements include carbon black and silica. These reinforcements are added in an amount of from 20 to 70 parts by weight per 100 parts by weight of the rubber polymer.

Suitable acid acceptors include magnesia, calcium hydroxide, calcium oxide, and hydrotalcite or sintered hydrotalcite. From the standpoint of water resistance, it is preferable to use from 8 to 25 parts by weight of hydrotalcite or sintered hydrotalcite per 100 parts by weight of the rubber polymer. Examples of usable commercially available hydrotalcite or sintered hydrotalcite are KW 2100, KW 2200, and DHT-4A-2 produced by Kyowa Chemical Industry Co., Ltd.

Suitable plasticizers include DOS (dioctyl sebacate), DOA (dioctyl adipate), DOP (dioctyl phthalate), and DOZ (dioctyl azelate). Taking a balance between heat resistance and cold resistance into account, the plasticizer is used in an amount of from 5 to 20 parts by weight per 100 parts by weight of the rubber polymer.

Suitable fillers include clay, calcium carbonate, talc, and single fibers. Suitable antioxidants include common hindered phenols and NBC (nickel dibutyldithiocarbamate). Suitable processing aids include aliphatic acid compounds and polyethylene glycol.

Vulcanization is usually carried out at a temperature of from 140 to 200$^\circ$C for 5 min to 1 hour, and preferably at a temperature of from 150 to 180$^\circ$C for 10 to 30 minutes, by use of, for example, a vulcanizing press or a vulcanizer.

As explained hereinbefore, the belting according to the present invention exhibits excellent resistance to heat and cold and excellent dynamic characteristics even on use under severe thermal conditions. Accordingly, the belting of the invention is suitable as an automotive timing belt and a poly-V-belt requiring strict heat resistance.

The present invention is now illustrated in greater detail with reference to Examples, but it should be understood that the present invention is not deemed to be limited thereto. All the percents, parts, and ratios are by weight unless otherwise indicated. Physical properties of the unvulcanized rubbers and vulcanized rubbers obtained in Examples and Comparative Examples were measured in accordance with JIS K6300 and JIS K6301, respectively.

EXAMPLE 1

An ethylene-butene-1 copolymer having an ethylene/butene-1 molar ratio of 93/7, a melt index of 6.2 g/10 min, and a density of 0.90 g/cc was uniformly dissolved in carbon tetrachloride. Chlorine gas was blown into the solution in the presence of $\alpha,\alpha'$-azobisisobutyronitrile as a catalyst for chlorination to obtain a chlorinated ethylene-butene-1 copolymer having a chlorine content of 30%. The product was freed of the solvent in a drum drier.

The resulting rubber polymer was kneaded together with compounding ingredients shown in Table 1 below in an open roll. The Mooney viscosity of the resulting compound is shown in Table 2.

The chlorinated ethylene-butene-1 copolymer was then subjected to press vulcanization under conditions shown in Table 2. Physical properties of the resulting vulcanized rubber are also shown in Table 2.

EXAMPLE 2

A rubber compound and a vulcanized product were prepared in the same manner as in Example 1, except for using an ethylene-butene-1 copolymer having an ethylene/butene-1 molar ratio of 96/4, a melt index of 4.3 g/10 min, and a density of 0.92 g/cc to obtain a chlorinated copolymer having a chlorine content of 27%.

The Mooney viscosity of the unvulcanized rubber compound and various physical properties of the vulcanized rubber are shown in Table 2.

EXAMPLE 3

A rubber compound and a vulcanized product were prepared in the same manner as in Example 1, except for using an ethylene-butene-1 copolymer having an ethylene/butene-1 molar ratio of 92/8, a melt index of 5.9 g/10 min, and a density of 0.90 g/cc to obtain a chlorinated copolymer having a chlorine content of 27%.

The Mooney viscosity of the unvulcanized rubber compound and various physical properties of the vulcanized rubber are shown in Table 2.

COMPARATIVE EXAMPLE 1

A commercially available chloroprene rubber "Skyprene R-10" (product of Tosoh Corporation) was kneaded with compounding ingredients as shown in Table 1. The Mooney viscosity of the resulting rubber compound is shown in Table 2.

The compound was subjected to press vulcanization under conditions shown in Table 2. The physical properties of the vulcanized product are also shown. It was proved that the vulcanized product failed to achieve desired heat resistance.

COMPARATIVE EXAMPLE 2

The same ethylene-butene-1 copolymer as used in Example 1 was uniformly dissolved in carbon tetrachloride. Chlorosulfonation of the copolymer was conducted by adding sulfuryl chloride to the solution using $\alpha,\alpha'$-azobisisobutyronitrile as a catalyst and pyridine as a promotor to obtain a chlorosulfonated ethylene-butene-1 copolymer having a chlorine content of 30% and a sulfur content of 1.4%. The reaction mixture was freed of the solvent in a drum drier.

The resulting product was kneaded together with compounding ingredients including a sulfur vulcanization accelerator as shown in Table 1 in an open roll. The Mooney viscosity of the resulting rubber compound is shown in Table 2.

The compound was subjected to press vulcanization under conditions shown in Table 2. The physical properties of the vulcanized rubber are also shown. It was proved that the vulcanized rubber failed to achieve desired dynamic fatigue resistance.

COMPARATIVE EXAMPLE 3

A rubber compound and a vulcanized product were prepared in the same manner as in Example 1, except for using a commercially available chlorinated polyethylene product prepared by an aqueous suspension process ("Elaslene 351AE" produced by Showa Denko K.K.).

The Mooney viscosity of the unvulcanized rubber compound and various physical properties of the vulcanized rubber are shown in Table 2. It can be seen that cold resistance as desired could not be obtained.

COMPARATIVE EXAMPLE 4

A rubber compound and a vulcanized product were prepared in the same manner as in Example 1, except for using high-density polyethylene containing no α-olefin component, having a melt index of 4.5 g/10 min and a density of 0.96 g/cc to prepare chlorinated polyethylene having a chlorine content of 35%.

The Mooney viscosity of the unvulcanized rubber compound and various physical properties of the vulcanized rubber are shown in Table 2. It can be seen that cold resistance as desired could not be obtained.

COMPARATIVE EXAMPLE 5

The chlorosulfonated ethylene-butene-1 copolymer obtained in Comparative Example 2 was kneaded with compounding ingredients in the same manner as in Example 1. The resulting compound was subjected to peroxide vulcanization, but the vulcanization was so retarded that the product could not be taken out as sheeting.

TABLE 1

| Additives (part) | Example 1 | Example 2 | Example 3 | Compar. Example 1 | Compar. Example 2 | Compar. Example 3 | Compar. Example 4 |
|---|---|---|---|---|---|---|---|
| Starting polymer | 100 | 100 | 100 | 100 | 100 | 100 | 100 |
| KW 2100[*1] | 10 | 10 | | | 10 | 10 | 10 |
| Magnesia | | | 5 | 4 | | | |
| Wax | 2 | 2 | 2 | | 2 | 2 | 2 |
| Stearic acid | | | | 1.5 | | | |
| Carbon black | 45 | 45 | 45 | 45 | 45 | 45 | 45 |
| DOS | 8 | 8 | 8 | 8 | 8 | 8 | 8 |
| DCP-40[*2] | 7.5 | 7.5 | 7.5 | | | 7.5 | 7.5 |
| TAIC-60[*3] | 6.7 | 6.7 | 6.7 | | | 6.7 | 6.7 |
| TRA[*4] (accelerator) | | | | | 2 | | |
| Pentaerythritol | | | | | 3 | | |
| ODA[*5] (antioxidant) | | | | 2 | | | |
| DP[*6] (antioxidant) | | | | 0.4 | | | |
| Zinc white | | | | 5 | | | |

Note: *1: Synthetic hydrotalcite, produced by Kyowa Chemical Industry Co., Ltd.

*2: Dicumyl peroxide, 40% purity

*3: Triallyl isocyanurate, 60% purity

*4: Dipentamethylenethiuram tetrasulfide

*5: Alkylated diphenylamine

*6: N,N'-Diphenyl-p-phenylenediamine

## TABLE 2

| | Example 1 | Example 2 | Example 3 | Compar. Example 1 | Compar. Example 2 | Compar. Example 3 | Compar. Example 4 |
|---|---|---|---|---|---|---|---|
| Mooney viscosity (ML1+4, 100°C) | 43 | 44 | 32 | 53 | 61 | 139 | 51 |
| Vulcanization time (min x 160°C) | 15 | 15 | 15 | 20 | 20 | 15 | 15 |
| Tensile characteristics: | | | | | | | |
| M100 (kg/cm²) | 40 | 66 | 38 | 50 | 39 | 71 | 51 |
| TB (kg/cm²) | 195 | 180 | 172 | 217 | 195 | 201 | 198 |
| EB (%) | 320 | 270 | 300 | 380 | 400 | 260 | 290 |
| Hs (JIS A) | 73 | 81 | 76 | 74 | 73 | 75 | 74 |
| Heat resistance (150°C x 3 days): | | | | | | | |
| ΔEB (%) | -52 | -47 | -46 | -94 | -49 | -53 | -53 |
| ΔHs (point) | +9 | +7 | +8 | +22 | +12 | +12 | +11 |
| Dynamic fatigue (flexometer, 100°C): | | | | | | | |
| Dynamic strain (%) | 0.8 | 0.7 | 0.7 | 0.5 | 6.9 | 0.9 | 0.9 |
| Cold resistance (Gehman torsion test): | | | | | | | |
| $T_5$ (°C) | -24 | -24 | -25 | -32 | -24 | -17 | -18 |
| $T_{10}$ (°C) | -29 | -30 | -31 | -36 | -29 | -22 | -22 |
| $T_{100}$ (°C) | -38 | -41 | -42 | -45 | -40 | -31 | -32 |

By comparing Examples and Comparative Examples, it is apparent that the belting according to the present invention has superior resistance against heat and dynamic fatigue.

While the invention has been described in detail and with reference to specific examples thereof, it will be apparent to one skilled in the art that various changes and modifications can be made therein without departing from the spirit and scope thereof.

**Claims**

**1.** Rubber belting obtained by vulcanizing a chlorinated ethylene-α-olefin copolymer with an organic

7

peroxide, the chlorinated ethylene-$\alpha$-olefin copolymer being prepared by a solution process in which a copolymer comprising an $\alpha$-olefin having from 3 to 6 carbon atoms and ethylene is dissolved in a solvent and then chlorinated to have a chlorine content of from 23 to 33% by weight.

2. Rubber belting as claimed in Claim 1, wherein said copolymer has an ethylene to $\alpha$-olefin molar ratio of from 98/2 to 85/15.

3. Rubber belting as claimed in Claim 1, wherein said copolymer is an ethylene-butene-1 copolymer or an ethylene-propylene copolymer.